# FASCICULE DE BREVET EUROPEEN

(11) **EP 3 676 148 B1**
(45) Date de publication et mention de la délivrance du brevet: **13.10.2021**
(21) Numéro de dépôt: 18758547.6
(22) Date de dépôt: 02.08.2018
(51) Int. Cl.: B60W 50/14, B60W 40/09

(54) **PROCÉDÉ D'ANALYSE DU COMPORTEMENT DE CONDUITE D'UN UTILISATEUR D'UN VÉHICULE AUTOMOBILE**
VERFAHREN ZUR ANALYSE DES FAHRVERHALTENS EINES KRAFTFAHRZEUGBENUTZERS
METHOD FOR ANALYSING THE DRIVING BEHAVIOUR OF A MOTOR VEHICLE USER

(30) Priorité: 31.08.2017 FR 1758028
(43) Date de publication de la demande: 08.07.2020
(73) Titulaire: Valeo Vision, 93012 Bobigny Cedex (FR)
(72) Inventeur: FLEURY, Benoist, 93012 Bobigny Cedex (FR); PORTE, Sophie, 93012 Bobigny Cedex (FR); LEBLANC, François, 93012 Bobigny Cedex (FR)
(74) Mandataire: Valeo Visibility
(86) Numéro de dépôt international: PCT/EP2018/071030
(87) Numéro de publication internationale: WO 2019/042702

(56) Documents cités:
- EP-A1- 3 006 297
- WO-A1-2016/107876
- US-A1- 2011 307 188
- US-A1- 2013 317 665

## Description

La présente invention concerne le traitement de données en particuliers de données de comportement de conduite d'un utilisateur d'un véhicule automobile.

Il existe un besoin d'estimer les comportements de conduite d'utilisateurs de véhicules automobiles. A cet effet des applications existantes prévoient d'utiliser des capteurs de terminaux mobiles d'utilisateurs (de type Smartphone par exemple), tels qu'un accéléromètre ou un module GPS (pour « *Global Positioning System* » en anglais), afin d'analyser le comportement de conduite de l'utilisateur. Les données sont ainsi acquises par le terminal mobile et remontée via une application à un serveur d'un fournisseur de service. Le serveur peut être une plateforme de service de type cloud du fournisseur de service, la plateforme de service étant apte à réunir les données issues d'une pluralité d'utilisateurs de véhicule automobile.

Les valeurs captées par un accéléromètre, et notamment les décélérations, permettent notamment de détecter des situations dites de « quasi-accident », qui sont statistiquement quinze fois plus répandues que des situations d'accident et qui permettent ainsi de mener des analyses sur un nombre d'échantillons plus significatif.

Toutefois, le nombre de capteurs sur de tels terminaux mobiles est restreint et il n'est ainsi pas possible de corréler le comportement de conduite de l'utilisateur avec le contexte dans lequel l'utilisateur se situe (conduite de jour, conduite sur sol mouillé, équipement du véhicule).

Une autre solution consiste à installer un boîtier, de type dongle, sur une prise diagnostic du véhicule automobile, qui reçoit des informations (via un bus dit CAN) issues de capteurs du véhicule, informations qui peuvent ainsi être envoyées par le boîtier au terminal mobile pour enrichir les données captées par le terminal mobile. En variante, ces données peuvent être remontées directement par le boîtier à un serveur.

Toutefois, peu d'informations sont accessibles sur la prise diagnostic. En outre, peu de paramètres sont génériques, la plupart étant propres au constructeur automobile. En outre, une telle solution impose l'implémentation d'un boîtier hardware dans le véhicule automobile ce qui est coûteux et impose un accès complexe à la prise diagnostic.

De plus, les données accessibles via la prise diagnostic sont généralement relatives au fonctionnement moteur de véhicule : régime moteur, vitesse de rotation du moteur, consommation, indicateurs de panne matériel, etc.

Toutefois, il n'est pas possible d'accéder à des informations relatives aux systèmes d'essuyage, de frein ou d'éclairage par exemple, qui ne sont pas accessibles via le bus CAN. Quand bien même de telles données seraient accessibles, elles sont pour le plus souvent cryptées.

Le document US2013317665 A1 divulgue en outre le préambule de la revendication 1.

La présente invention vise à améliorer la situation.

A cet effet, un premier aspect de l'invention concerne un procédé d'analyse du comportement de conduite d'un utilisateur d'un véhicule automobile, comportant les étapes suivantes:
- acquisition de données relatives au comportement de conduite d'un utilisateur, d'un instant et d'une position depuis un terminal mobile de l'utilisateur ;
- obtention de données contextuelles auprès d'une base de données en fonction de l'instant et de la position acquis ;
- corrélation des données relatives au comportement de conduite et des données contextuelles.

On entend par « donnée relative au comportement de conduite » toute information acquise pendant la conduite d'un véhicule par l'utilisateur, telle que la trajectoire du véhicule automobile, sa vitesse, son accélération, la détection d'une situation d'accident ou de quasi-accident, etc.

On entend par « corréler » toute opération visant à établir un lien entre plusieurs types de données, par exemple par l'élaboration d'un modèle mathématique enrichi de manière statistique. De telles opérations sont bien connues de la personne du métier et ne sont pas développés davantage dans la présente description.

On entend par « donnée contextuelle » toute donnée se rapportant aux conditions de conduite du véhicule automobile.

Les données contextuelles sont donc obtenues par consultation d'une base de données à partir de l'instant de de la position du véhicule automobile lors de l'acquisition des données relatives au comportement de conduite, ce qui permet d'enrichir ces données sans avoir à ajouter de boîtier physique dans le véhicule automobile.

Selon le premier aspect de l'invention, le procédé d'analyse comprend en outre l'acquisition d'un identifiant de l'utilisateur depuis le terminal mobile de l'utilisateur et l'obtention, à partir d'une base de données d'utilisateur, de données d'équipements du véhicule automobile de l'utilisateur en fonction de l'identifiant de l'utilisateur. Les données relatives au comportement et les données contextuelles sont en outre corrélées avec les données d'équipements.

Il est ainsi possible de corréler l'impact des données contextuelles sur le comportement de conduite avec les équipements installés dans le véhicule automobile et éventuellement avec l'usure des équipements. Il devient ainsi possible de mettre en évidence qu'un tel type d'équipement dégrade moins un score de conduite d'un utilisateur qu'un autre type d'équipement. Les données d'équipements sont de plus acquises de manière transparente pour l'utilisateur.

De manière alternative, le procédé peut comprendre en outre l'acquisition de données d'équipements depuis le terminal mobile de l'utilisateur et les données d'équipements peuvent être corrélées avec les données relatives au comportement et les données contextuelles.

Il est ainsi possible de corréler l'impact des données contextuelles sur le comportement de conduite avec les équipements installés dans le véhicule automobile et éventuellement avec l'usure des équipements. Il devient ainsi possible de mettre en évidence qu'un tel type d'équipement dégrade moins un score de conduite d'un utilisateur qu'un autre type d'équipement. L'utilisateur peut par ailleurs configurer les données d'équipements, notamment lorsqu'il a modifié des équipements du véhicule automobile.

Selon le premier aspect de l'invention, la base de données comprend une base de données météorologiques stockant des couples instant-position en correspondance avec des données météorologiques, et les données contextuelles obtenues comprennent des données météorologiques.

Ainsi, les données relatives au comportement de conduite sont corrélées avec des données pertinentes ayant une influence directe sur la conduite de l'utilisateur.

Selon le premier aspect de l'invention, les données météorologiques indiquent la présence ou non de pluie à la position et à l'instant, et les données d'informations d'équipements indiquent un type ou un modèle de système d'éclairage, de système de freinage et/ou d'essuie-glace.

Ainsi, il est possible de connaître l'impact d'un modèle ou type d'équipement sur un le comportement de conduite d'un utilisateur.

Selon un mode de réalisation, la base de données peut comprendre une base de données d'éphéméride stockant des couples temps-position en correspondance avec des données de luminosité, et les données contextuelles obtenues peuvent comprendre des données de luminosité.

Ainsi, les données relatives au comportement de conduite sont corrélées avec des données pertinentes ayant une influence directe sur la conduite de l'utilisateur.

En complément, les données d'informations d'équipements peuvent indiquer un type ou un modèle de système d'éclairage.

Ainsi, il est possible de connaître l'impact d'un modèle ou type de système d'éclairage sur un le comportement de conduite d'un utilisateur.

En complément, les étapes du procédé peuvent être répétées pour chaque acquisition de données relatives au comportement de conduite d'un utilisateur, d'un instant et d'une position, et la corrélation peut comprendre une estimation statistique de l'influence de conditions météorologiques et de luminosité sur le comportement de conduite de l'utilisateur.

Selon un mode de réalisation, le procédé peut comprendre en outre l'envoi d'un message d'alerte au terminal mobile par le serveur, en fonction de la corrélation entre les données relatives au comportement de conduite et les données contextuelles.

L'utilisateur est ainsi informé en temps réel de l'influence des données contextuelles, pouvant être météorologiques, afin d'adapter sa conduite, en ralentissant ou étant plus concentré par exemple, ce qui permet d'améliorer la sécurité liée à la conduite. L'utilisateur peut en outre se rendre compte du dysfonctionnement d'un équipement au moyen d'un tel message d'alerte, par exemple des systèmes d'éclairage, si la diminution de luminosité affecte trop grandement sa conduite. Le procédé permet ainsi d'assister l'utilisateur dans sa conduite.

Un deuxième aspect de l'invention concerne un programme d'ordinateur comprenant des instructions de code enregistrées sur un support lisible par un ordinateur, pour l'exécution des étapes du procédé selon le premier aspect de l'invention.

Un troisième aspect de l'invention concerne un système comprenant un serveur d'analyse du comportement de conduite d'un utilisateur d'un véhicule automobile et un terminal mobile, ledit terminal mobile étant configuré pour acquérir les données relatives au comportement de conduite de l'utilisateur, l'instant et la position, et les transmettre vers le serveur d'analyse via un réseau, ledit serveur d'analyse comportant:
- une première interface configurée pour acquérir de données relatives au comportement de conduite d'un utilisateur, d'un instant et d'une position depuis un terminal mobile de l'utilisateur ;
   - une deuxième interface configurée pour obtenir de données contextuelles auprès d'une base de données en fonction de l'instant et de la position acquis ;
   - un processeur configuré pour corréler des données relatives au comportement de conduite et des données contextuelles,
   ledit serveur d'analyse étant configuré de sorte à mettre en œuvre le procédé d'analyse du comportement de conduite d'un utilisateur d'un véhicule automobile, selon le premier aspect de l'invention.

D'autres caractéristiques et avantages de l'invention apparaitront à l'examen de la description détaillée ci-après, et des dessins annexés sur lesquels :
- la figure 1 représente un système d'analyse selon un mode de réalisation de l'invention;
- la figure 2 est un diagramme illustrant les étapes d'un procédé d'analyse selon un mode de réalisation de l'invention;
- la figure 3 est un diagramme d'échanges entre les entités du système d'analyse illustré en référence à la figure 1;
- la figure 4 illustre un serveur selon un mode de réalisation de l'invention;
- la figure 5 illustre un terminal mobile selon un mode de réalisation de l'invention.

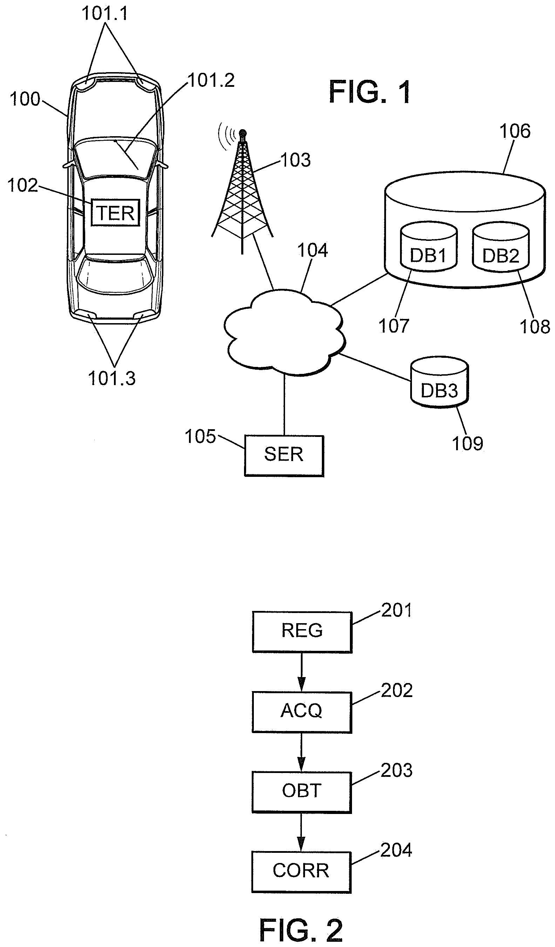

La figure 1 illustre un système selon un mode de réalisation de l'invention.

Le système comprend un véhicule automobile 100 d'un utilisateur.

Le véhicule automobile 100 comprend un ensemble d'équipements donné à titre illustratifs, tel qu'un ensemble comprenant système d'éclairage 101.1, un essuieglace 101.2 et un système de freinage 101.3.

Chaque équipement peut être d'un type donné et d'un modèle donné. Par exemple, le système d'éclairage peut appartenir à trois types : halogène, xénon, LED, etc. Un modèle peut identifier un constructeur et une référence du constructeur. Quant au modèle, il peut notamment dépendre du constructeur de l'équipement, de l'année de fabrication ou du nom du modèle.

Lorsque l'utilisateur est dans le véhicule automobile, en situation de conduite par exemple, un terminal 102 de l'utilisateur, dit terminal mobile, est embarqué dans le véhicule automobile. Le terminal mobile 102 peut par exemple être un téléphone intelligent, dit Smartphone, ou tout autre dispositif portable de l'utilisateur, tel qu'un ordinateur portable ou une tablette. En variante, le terminal mobile peut être un terminal embarqué et installé dans le véhicule automobile 100.

Le terminal mobile peut accéder à un serveur distant, via par exemple, un réseau mobile 103 relié à un réseau étendu de communications 104 de type internet par exemple. Aucune restriction n'est attachée au réseau mobile 103, qui peut être tout réseau de données de type 3G, 4G ou de génération supérieure.

Le serveur 105 est un serveur d'un fournisseur de service ayant pour objet d'analyser le comportement de conduite des utilisateurs, et de corréler de tels comportements avec des informations contextuelles, ce qui permet d'enrichir l'analyse du comportement de conduite d'un utilisateur et de notamment déterminer des contextes conduisant à des situations d'accidents ou de quasi-accidents.

Contrairement aux solutions de l'art antérieur, le système selon l'invention comprend une base de données 106 qui est configurée pour fournir au serveur 105 des données contextuelles en fonction de couples instant-position remontés depuis le terminal mobile 102. Il n'est ainsi nul besoin d'installer des capteurs supplémentaires dans le véhicule automobile, ou des boîtiers de type dongle au niveau des prises diagnostic du véhicule automobile.

La base de données 106 peut être un ensemble de bases de données, comprenant une base de données météorologiques 107 et optionnellement une base de données d'éphéméride 108. La base de données météorologiques 107 stocke en correspondance des couples instant/position avec des données météorologiques, telle qu'une indication de présence ou d'absence de pluie.

Une indication de présence ou d'absence de pluie associée à un couple instant/position donné indique s'il a plu ou non à la position donnée et à l'instant donné. Une telle information contextuelle est pertinente en ce qu'elle permet de savoir si le système d'éclairage 101.1 du véhicule est activé ou non à l'instant donné, si les essuieglace 101.2 sont activés ou non à l'instant donné, et si le système de freinage 101.3 est soumis à une route mouillée ou sèche, ce qui permet d'enrichir l'analyse de comportement de conduite de l'utilisateur, notamment en cas d'accident ou de quasi-accident. De manière plus générale, une telle information contextuelle permet de connaître les conditions climatiques dans lesquelles peuvent avoir lieu un accident ou quasi-accident.

La base de données d'éphéméride 108 peut stocker en correspondance des couples instant/position avec des données d'éphéméride telles que des données de luminosité indiquant un niveau de luminosité ambiant. Une telle information contextuelle est pertinente en ce qu'elle permet de savoir si le système d'éclairage 101.1 du véhicule est activé ou non à l'instant donné. De manière plus générale, une telle information contextuelle permet de connaître les conditions de luminosité dans lesquelles peuvent avoir lieu un accident ou quasi-accident.

Le serveur 105 accède également à une base de données d'utilisateurs 109 stockant en correspondance des identifiants d'utilisateurs avec des données d'équipement respectives. Une telle base de données permet de savoir de quels équipements est équipé le véhicule automobile de l'utilisateur identifié. Aucune restriction n'est attachée à la manière dont la base de données d'utilisateurs est renseignée. Elle peut par exemple être renseignée de manière déclarative par l'utilisateur, par exemple, lorsqu'il crée un compte utilisateur auprès du serveur 105 : l'utilisateur indique les équipements du véhicule qu'il possède et indique un identifiant utilisateur, et ces données sont stockées en correspondance dans la base de données d'utilisateurs 109 par le serveur 105. En complément, l'utilisateur peut indiquer un état d'usure des équipements du véhicule automobile 100. Toutefois, l'invention n'est pas restreinte à ce seul exemple et la base de données d'utilisateurs peut être renseignée par tout autre moyen. Par exemple, à partir de l'identifiant d'utilisateur, il peut être accédé au modèle du véhicule automobile que l'utilisateur possède, et un tel modèle peut être associés par défaut avec des équipements donnés.

Aucune restriction n'est attachée au service exploitant les analyses de comportement de conduite obtenues.

Le serveur 105 est préférentiellement accessible par des terminaux de plusieurs utilisateurs, ce qui permet de compiler des données issues de plusieurs utilisateurs et ainsi d'enrichir les profils de conducteur.

A cet effet, une application dédiée au fournisseur de service peut être installée sur le terminal mobile 102. L'application permet d'accéder ainsi directement au serveur 105 sans avoir à transiter par un navigateur web, et permet d'améliorer l'interface avec l'utilisateur.

La figure 2 est un diagramme illustrant les étapes d'un procédé d'analyse selon un mode de réalisation de l'invention.

A une étape 201 optionnelle, l'utilisateur, via le terminal mobile 102 ou via tout autre terminal utilisateur, s'enregistre en tant qu'utilisateur auprès du serveur 105 du fournisseur de service. Aucune restriction n'est attachée à l'étape d'enregistrement, qui peut comprendre la fourniture de données d'utilisateurs, notamment la fourniture de données permettant d'identifier de manière unique l'utilisateur. De manière complémentaire, l'étape d'enregistrement peut comprendre la définition d'un mot de passe, permettant une authentification ultérieure de l'utilisateur du terminal mobile 102 auprès du serveur 105. De plus, comme décrit précédemment, l'utilisateur peut optionnellement déclarer les équipements du véhicule automobile, ainsi que leurs états d'usure respectifs.

A une étape 202, le serveur 105 acquiert, depuis le terminal mobile 102 de l'utilisateur, des données relatives au comportement de conduite de l'utilisateur, ces données étant accompagnées d'un instant et d'une position. L'instant repère le moment auquel les données relatives au comportement de conduite ont été acquises et la position repère la position du véhicule lors de l'acquisition des données relatives au comportement de conduite.

Toutes ces données peuvent être acquises par le terminal mobile 102 sans nul besoin de recourir à des capteurs supplémentaires disposés dans le véhicule automobile 100. En effet, les données relatives au comportement de conduite peuvent être des données de vitesses et/ou d'accélération qui peuvent être acquises par un GPS par le terminal mobile 102, ou via un module d'accéléromètre du terminal mobile 102. Quant à l'instant d'acquisition, il peut être obtenu au moyen d'une horloge interne du terminal mobile 102. La position du terminal mobile 102 peut également être déterminée de manière préférentielle par GPS, ou en variante en fonction de l'antenne du réseau mobile 103 à laquelle le terminal mobile 102 est connecté.

Comme évoqué précédemment, l'étape 202 permet également d'acquérir un identifiant d'utilisateur. L'identifiant d'utilisateur peut être joint aux données relatives au comportement de conduite, ou peut être connu du serveur 105 au moyen d'une étape de connexion du terminal mobile 102 auprès du serveur 105, suite à une étape d'enregistrement initiale.

A une étape 203, le serveur 105 obtient des données contextuelles auprès de la base de données 106, en fonction de l'instant et de la position acquis. Comme expliqué précédemment, l'étape 203 comprend également l'obtention de données d'équipements auprès de la base de données d'utilisateur 109, en fonction de l'identifiant de l'utilisateur.

A une étape 204, les données relatives au comportement de conduite et les données contextuelles sont corrélées afin d'analyser le comportement de conduite de l'utilisateur.

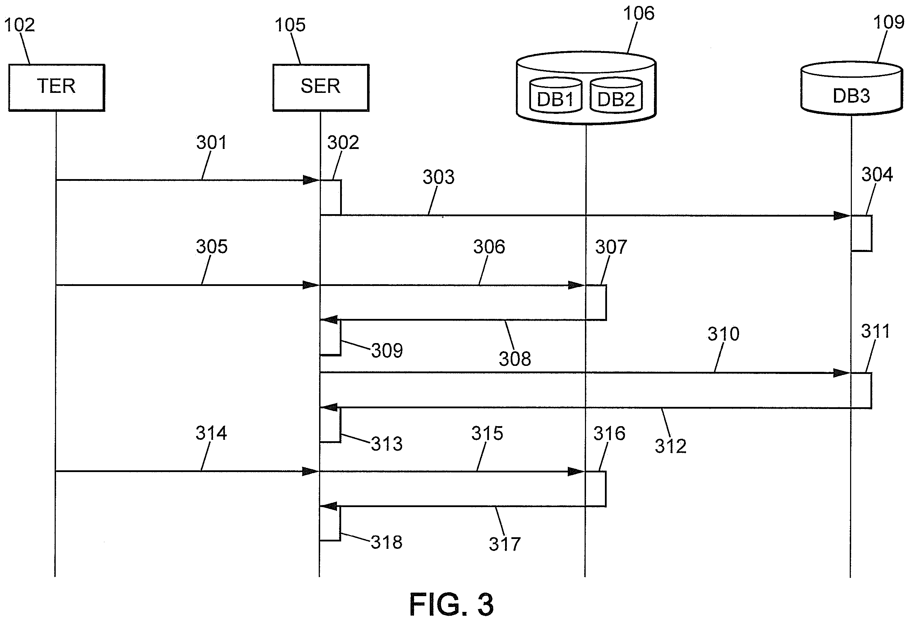

La figure 3 est un diagramme d'étapes illustrant de manière plus détaillée les échanges entre certaines des entités du système présenté en référence à la figure 1.

A une étape 301 initiale, l'utilisateur du terminal mobile 102 s'enregistre auprès du serveur 105, en fournissant notamment un identifiant utilisateur et des données d'équipement, ou alternativement un identifiant du véhicule automobile 100. Il est à noter que l'étape 301 n'est pas nécessairement mise en œuvre entre le terminal mobile 102 et le serveur 105, n'importe quel terminal utilisateur pouvant être utilisé par l'utilisateur en lieu et place du terminal mobile 102.

A une étape 302, le serveur 105 détermine des données d'équipements en fonction de l'identifiant du véhicule automobile. A cet effet, le serveur 105 consulte une base de données non représentée sur la figure 1.

A l'étape 303, l'identifiant d'utilisateur peut être communiqué avec les données d'équipements à la base de données d'utilisateurs 109 afin d'y être stocké. A l'étape 304, la base de données d'utilisateurs 109 stocke en association les données d'équipements et l'identifiant d'utilisateur.

A une étape ultérieure 305, le terminal 102 acquiert des données relatives au comportement de conduite de l'utilisateur, et les transmet au serveur 105 avec l'instant et la position qui correspondent à l'acquisition. De manière complémentaire et optionnelle, le serveur 105 transmet en outre un identifiant d'utilisateur, s'il n'a pas été précédemment transmis.

A une étape 306, le serveur 105 consulte la base de données afin d'obtenir des données contextuelles correspondant à l'instant et à la position acquis à l'étape 305. A cet effet, une requête identifiant l'instant et la position peut être envoyée à la base de données 106. A l'étape 307, la base de données 106 détermine les données contextuelles correspondant à l'instant et à la position indiqués dans la requête. La base de données 106 retourne les données contextuelles déterminées, à l'étape 308, au serveur 105.

Le serveur 105 corrèle alors à une étape 309 les données contextuelles reçues et les données relatives au comportement de conduite de l'utilisateur. On entend par « corréler » toute opération visant à établir un lien entre plusieurs types de données, par exemple par l'élaboration d'un modèle mathématique enrichi de manière statistique. De telles opérations sont bien connues de la personne du métier et ne sont pas développées davantage dans la présente description.

Une telle corrélation peut ensuite être utilisée pour ajuster un score de conduite du conducteur. En outre, en répétant les étapes du procédé sur les mêmes trajets ou sur des trajets statistiquement similaires, il est possible d'élaborer un modèle décrivant l'impact des conditions météorologiques sur le score de conduite. Aucune restriction n'est attachée à l'exploitation qui est faite de la corrélation obtenue par le procédé d'analyse selon l'invention. Par exemple, lorsqu'un score de conduite du conducteur devient trop faible, inférieur à un seuil donné par exemple, une alerte peut être envoyée au conducteur. De manière alternative, lorsqu'il est déterminé que le contexte affecte fortement le comportement de conduite de l'utilisateur, un message d'alerte peut être envoyé par le serveur 105 au terminal 102, afin d'en informer l'utilisateur et de l'inciter à plus de prudence. Le procédé selon l'invention permet ainsi d'améliorer la sécurité de l'utilisateur tout en évitant la mesure directe de données contextuelles sur le véhicule : celles-ci sont déduites de l'instant et de la position du véhicule automobile 100.

Comme évoqué précédemment, à une étape 310, le serveur 105 transmet en outre l'identifiant d'utilisateur à la base de données d'utilisateurs 109. A une étape 311, la base de données d'utilisateurs 109 déduit de l'identifiant d'utilisateur reçu, des données d'équipements du véhicule automobile 100 de l'utilisateur identifié.

Les données d'équipements sont retournées à l'étape 312 au serveur 105.

A une étape 313, le serveur 105 corrèle les données d'équipements avec les données contextuelles reçues et les données relatives au comportement de conduite de l'utilisateur. La présente invention permet ainsi d'évaluer l'impact des équipements automobiles sur le comportement de conduite de l'utilisateur. Il est ainsi possible de déduire les équipements automobiles améliorant la conduite de l'utilisateur. Ceci est de plus permis sans nécessiter de mesure directe de l'état de fonctionnement des équipements automobiles sur le véhicule automobile 102, puisque les données contextuelles sont connues.

Ainsi, la présente invention présente les avantages :
- d'évaluer l'impact des données contextuelles, telles que les conditions météorologiques et/ou les conditions de luminosité naturelle sur la conduite des utilisateurs,
- de corréler en outre un tel impact avec les équipements installés dans le véhicule automobile et éventuellement avec l'usure des équipements. Il devient ainsi possible de mettre en évidence qu'un tel type d'équipement dégrade moins le score de conduite d'un utilisateur qu'un autre type d'équipement ;
- d'éviter toute installation physique de matériel additionnel sur les véhicules automobiles. Le terminal mobile 102 peut notamment comprendre de manière native des capteurs de géolocalisation, de vitesse et d'accélération. Le déploiement du procédé selon l'invention est ainsi facilité.

L'étape d'acquisition de données de comportement de conduite de l'utilisateur de l'étape 305, peut être répétée à l'étape 314, pour un nouveau couple instant/position du véhicule automobile. Des étapes 315 à 317 similaires aux étapes 306 à 308 peuvent alors être effectuées selon le procédé, sur la base du nouveau couple instant/position du véhicule automobile. Ainsi, les données de comportement de conduite peuvent être remontées régulièrement, par exemple avec un pas temporel fixe, par exemple égal à une seconde.

A l'étape 318, les nouvelles données de comportement de conduite peuvent être corrélées avec les données contextuelles obtenues à partir du nouveau couple instant/position du véhicule automobile 100, en enrichissant par exemple un modèle statistique.

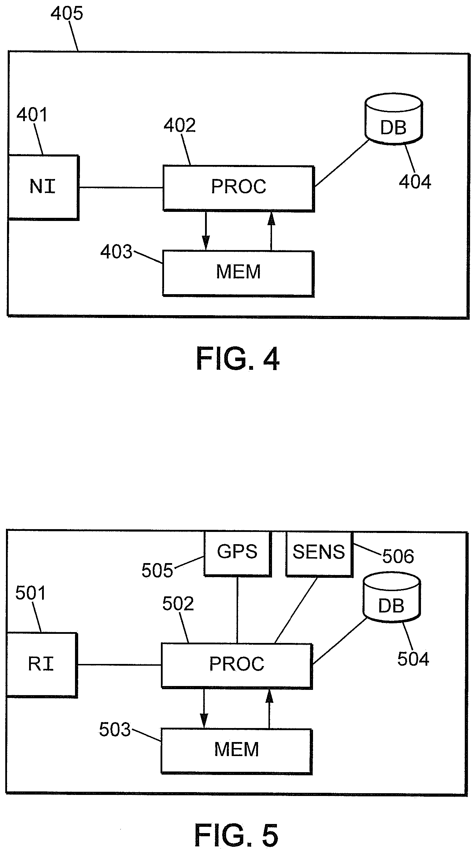

La figure 4 présente le serveur 105 selon un mode de réalisation de l'invention.

Le serveur 105 comprend une mémoire vive 403 et un processeur 402 pour stocker des instructions permettant la mise en œuvre des étapes 301, 302, 303, 305, 306, 308, 309, 310, 312, 313, 314, 315, 317 et 318. Le serveur 105 peut comporter une base de données 404 pour le stockage de données destinées à être conservées avant, pendant ou après l'application du procédé. La base de données 404 peut notamment incorporer tout ou partie de la base de données 106 et/ou de la base de données d'utilisateurs 109. Le serveur comporte en outre une interface réseau 401 configurée à la fois pour communiquer avec les bases de données 106 et 109, dans le cas où elles ne sont pas incluses dans la base de données 404, avec le terminal mobile 102, par l'intermédiaire du réseau 104. De manière générale, l'interface réseau 401 permet d'interagir avec n'importe quelle entité connectée au réseau étendu 104. Une seule interface réseau 501 a été représentée. Toutefois, l'invention peut prévoir que le serveur 105 comprenne une deuxième interface pour communiquer avec la base de données 106 et/ou la base de données 109.

La figure 5 présente un terminal mobile 102 selon un mode de réalisation de l'invention.

Le terminal mobile 102 comprend une mémoire vive 503 et un processeur 502 pour stocker des instructions permettant la mise en œuvre des étapes 301, 305 et 314. En outre, le processeur peut exécuter une application dédiée au service fourni par le fournisseur de service correspondant au serveur 105. Le terminal mobile 102 peut comporter une base de données 504 pour le stockage de données destinées à être conservées avant, pendant ou après l'application du procédé. Par exemple, la base de données 504 peut stocker un identifiant d'utilisateur, des données d'équipements, des données de comportement de conduite et peut stocker le code de l'application dédiée au serveur 105.

Le terminal mobile 102 peut comprendre un ou plusieurs capteurs 506, tel qu'un accéléromètre par exemple, et un module GPS 505.

En outre, le terminal mobile 501 comprend une interface 501, telle qu'une interface radio permettant d'accéder au réseau mobile 103, au réseau étendu 104 et donc au serveur 105.

Bien entendu, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention, définie par les revendications jointes.

## Revendications

1. Procédé d'analyse du comportement de conduite d'un utilisateur d'un véhicule automobile (100), comportant les étapes suivantes:
- acquisition (202; 305; 314) de données relatives au comportement de conduite d'un utilisateur, d'un instant et d'une position depuis un terminal mobile (102) de l'utilisateur ;
- obtention (203 ; 308 ; 317) de données contextuelles auprès d'une base de données (106) en fonction de l'instant et de la position acquis ;
- corrélation (204) des données relatives au comportement de conduite et des données contextuelles,
comprenant en outre l'acquisition d'un identifiant de l'utilisateur depuis le terminal mobile de l'utilisateur et l'obtention (312), à partir d'une base de données d'utilisateurs (109), de données d'équipements du véhicule automobile de l'utilisateur en fonction de l'identifiant de l'utilisateur,
dans lequel les données relatives au comportement et les données contextuelles sont en outre corrélées (313) avec les données d'équipements,
dans lequel la base de données comprend une base de données météorologiques (107) stockant des couples instant-position en correspondance avec des données météorologiques,
dans lequel les données contextuelles obtenues comprennent des données météorologiques,
et **caractérisé en ce que** les données météorologiques indiquent la présence ou non de pluie à ladite position et audit instant,
et **en ce que** les données d'informations d'équipements indiquent un type ou un modèle de système d'éclairage, de système de freinage et/ou d'essuie-glace.

2. Procédé d'analyse selon la revendication 1, comprenant en outre l'acquisition (301) de données d'équipements depuis le terminal mobile de l'utilisateur,
et dans lequel les données d'équipements sont corrélées (313) avec les données relatives au comportement et les données contextuelles.

3. Procédé d'analyse selon l'une des revendications précédentes, dans lequel la base de données (106) comprend une base de données d'éphéméride (108) stockant des couples temps-position en correspondance avec des données de luminosité, et dans lequel les données contextuelles obtenues comprennent des données de luminosité.

4. Procédé selon les revendications 1 et 3 ou selon les revendications 2 et 3, dans lequel les données d'informations d'équipements indiquent un type ou un modèle de système d'éclairage.

5. Procédé selon la revendication 1, prise en combinaison avec la revendication 3 ou 4, dans lequel les étapes du procédé sont répétées pour chaque acquisition de données relatives au comportement de conduite d'un utilisateur, d'un instant et d'une position, et dans lequel la corrélation (318) comprend une estimation statistique de l'influence de conditions météorologiques et de luminosité sur le comportement de conduite de l'utilisateur.

6. Procédé selon l'une des revendications précédentes, comprenant en outre l'envoi d'un message d'alerte au terminal mobile par le serveur, en fonction de la corrélation entre les données relatives au comportement de conduite et les données contextuelles.

7. Programme d'ordinateur comprenant des instructions de code enregistrées sur un support lisible par un ordinateur, pour l'exécution des étapes du procédé selon l'une quelconque des revendications précédentes.

8. Système comprenant un serveur d'analyse du comportement de conduite d'un utilisateur d'un véhicule automobile (105) et un terminal mobile (102),
ledit terminal mobile (102) étant configuré pour acquérir les données relatives au comportement de conduite de l'utilisateur, l'instant et la position, et les transmettre vers le serveur d'analyse via un réseau,
ledit serveur d'analyse (105) comportant :
- une première interface (401) configurée pour acquérir des données relatives au comportement de conduite d'un utilisateur, d'un instant et d'une position depuis un terminal mobile (102) de l'utilisateur ;
- une deuxième interface (401) configurée pour obtenir des données contextuelles auprès d'une base de données en fonction de l'instant et de la position acquis ;
- un processeur (402) configuré pour corréler des données relatives au comportement de conduite et des données contextuelles,
ledit serveur d'analyse (105) étant configuré de sorte à mettre en œuvre le procédé d'analyse du comportement de conduite d'un utilisateur d'un véhicule automobile (100), selon l'une quelconque des revendications 1 à 6.

## Patentansprüche

1. Verfahren zur Analyse des Fahrverhaltens eines Benutzers eines Kraftfahrzeugs (100), das die folgenden Schritte aufweist:
- Erfassen (202; 305; 314) von Daten bezüglich des Fahrverhaltens eines Benutzers, eines Zeitpunkts und einer Position von einem mobilen Endgerät (102) des Benutzers aus;
- Erhalten (203; 308; 317) von Kontextdaten bei einer Datenbank (106) in Abhängigkeit vom erfassten Zeitpunkt und von der erfassten Position;
- Korrelieren (204) der Daten bezüglich des Fahrverhaltens und der Kontextdaten,
umfassend ferner das Erfassen einer Kennung des Benutzers von dem mobilen Endgerät des Benutzers aus und Erhalten (312), aus einer Benutzerdatenbank (109), von Ausstattungsdaten des Kraftfahrzeugs des Benutzers in Abhängigkeit von der Kennung des Benutzers,
wobei die Daten bezüglich des Verhaltens und die Kontextdaten ferner mit den Ausstattungsdaten korreliert (313) werden,
wobei die Datenbank eine Wetterdatenbank (107) umfasst, in der Zeitpunkt-Positions-Paare in Entsprechung mit Wetterdaten gespeichert sind,
wobei die erhaltenen Kontextdaten Wetterdaten umfassen, und **dadurch gekennzeichnet, dass** die Wetterdaten angeben, ob es an der Position und zu dem Zeitpunkt regnet oder nicht,
und dass die Ausstattungsinformationsdaten einen Typ oder ein Modell eines Beleuchtungssystems, Bremssystems und/oder Scheibenwischersystems angeben.

2. Analyseverfahren nach Anspruch 1, das ferner das Erfassen (301) von Ausstattungsdaten von dem mobilen Endgerät des Benutzers aus erfasst und bei dem die Ausstattungsdaten mit den Daten bezüglich des Verhaltens und den Kontextdaten korreliert (313) werden.

3. Analyseverfahren nach einem der vorhergehenden Ansprüche, bei dem die Datenbank (106) eine Ephemeridendatenbank (108) umfasst, die Zeit-Positions-Paare in Entsprechung mit Helligkeitsdaten speichert, und bei dem die erhaltenen Kontextdaten Helligkeitsdaten umfassen.

4. Verfahren nach den Ansprüchen 1 und 3 oder nach den Ansprüchen 2 und 3, bei dem die Ausstattungsinformationsdaten einen Typ oder ein Modell eines Beleuchtungssystems angeben.

5. Verfahren nach Anspruch 1 in Kombination mit Anspruch 3 oder 4, bei dem die Schritte des Verfahrens für jede Erfassung von Daten bezüglich des Fahrverhaltens eines Benutzers, eines Zeitpunkts und einer Position wiederholt werden und bei dem das Korrelieren (318) eine statistische Einschätzung des Einflusses von Wetter- und Helligkeitsbedingungen auf das Fahrverhalten des Benutzers umfasst.

6. Verfahren nach einem der vorhergehenden Ansprüche, das ferner das Senden einer Warnmeldung durch den Server an das mobile Endgerät in Abhängigkeit von der Korrelation zwischen den Daten bezüglich des Fahrverhaltens und den Kontextdaten umfasst.

7. Computerprogramm, das auf einem computerlesbaren Datenträger gespeicherte Codeanweisungen zum Ausführen der Schritte des Verfahrens nach einem der vorhergehenden Ansprüche umfasst.

8. System, das einen Analyseserver zur Analyse des Fahrverhaltens eines Benutzers eines Kraftfahrzeugs (105) und ein mobiles Endgerät (102) umfasst,
wobei das mobile Endgerät (102) dazu ausgelegt ist, Daten bezüglich des Fahrverhaltens des Benutzers, des Zeitpunkts und der Position zu erfassen und sie über ein Netzwerk zum Analyseserver zu übertragen,
wobei der Analyseserver (105) aufweist:
- eine erste Schnittstelle (401), die dazu ausgelegt ist, Daten bezüglich des Fahrverhaltens eines Benutzers, eines Zeitpunkts und einer Position von einem mobilen Endgerät (102) des Benutzers aus zu erfassen;
- eine zweite Schnittstelle (401), die dazu ausgelegt ist, Kontextdaten bei einer Datenbank in Abhängigkeit vom erfassten Zeitpunkt und von der erfassten Position zu erhalten;
- einen Prozessor (402), der dazu ausgelegt ist, Daten bezüglich des Fahrverhaltens und Kontextdaten zu korrelieren,
wobei der Analyseserver (105) so ausgelegt ist, dass er das Verfahren zur Analyse des Fahrverhaltens eines Benutzers eines Kraftfahrzeugs (100) nach einem der Ansprüche 1 bis 6 umsetzt.

## Claims

1. Method for analyzing the driving behavior of a user of a motor vehicle (100), comprising the following steps:
- acquiring (202; 305; 314) data relating to a user's driving behavior, a time and a position from a mobile terminal (102) of the user;
- obtaining (203; 308; 317) contextual data at a database (106) as a function of the acquired time and position;
- correlating (204) the data relating to the driving behavior and the context data,
further comprising acquiring an identifier of the user from the user's mobile terminal and obtaining (312), from a user database (109), equipment data of the user's motor vehicle in dependence on the identifier of the user,
wherein the behavioral data and the contextual data are further correlated (313) with the equipment data,
wherein the database comprises a weather database (107) in which time-position pairs are stored in correspondence with weather data,
wherein the obtained context data comprises weather data,
and **characterised in that** the weather data indicates the occurrence or absence thereof of rain at the position and time,
and **in that** the equipment information data indicates a type or model of a lighting system, brake system, and/or windshield wiper system.

2. Analysis method according to claim 1, further comprising acquiring (301) equipment information data from the user's mobile terminal, and correlating (313) the equipment information data with the behavioral data and context data.

3. Analysis method according to any one of the preceding claims, wherein the database (106) comprises an ephemeris database (108) storing time-position pairs in correspondence with brightness data, and wherein the obtained context data comprises brightness data.

4. Method according to claims 1 and 3 or according to claims 2 and 3,
wherein the equipment information data indicates a type or model of a lighting system.

5. Method according to claim 1 in combination with claim 3 or 4, wherein the steps of the method are repeated for each acquisition of data relating to a user's driving behavior, a time, and a position, and wherein correlating (318) comprises statistically estimating the influence of weather and brightness conditions on the user's driving behavior.

6. Method according to any one of the preceding claims, further comprising sending an alert message by the server to the mobile terminal in dependence on the correlation between the data relating to the driving behavior and the context data.

7. Computer program comprising code instructions stored on a computerreadable medium for performing the steps of the method according to any one of the preceding claims.

8. System comprising an analysis server for analyzing the driving behavior of a user of a motor vehicle (105) and a mobile terminal (102),
wherein the mobile terminal (102) is adapted to collect data regarding the driving behavior of the user, the time and the position and to transmit them via a network to the analysis server,
wherein the analysis server (105) comprises:
- a first interface (401) adapted to acquire data relating to a user's driving behavior, a time, and a position from a user's mobile terminal (102);
- a second interface (401) adapted to obtain contextual data at a database as a function of the captured time and position;
- a processor (402) adapted to correlate data related to driving behavior and context data,
wherein the analysis server (105) is adapted to implement the method of analyzing the driving behavior of a user of a motor vehicle (100) according to any one of claims 1 to 6.
